Europäisches Patentamt

European Patent Office

Office européen des brevets

(11) Veröffentlichungsnummer: **0 199 208**
A1

## (12) EUROPÄISCHE PATENTANMELDUNG

(21) Anmeldenummer: 86104960.9

(22) Anmeldetag: 11.04.86

(51) Int. Cl.⁴: **H 01 R 13/53**
H 02 B 11/04, H 02 G 15/103

(30) Priorität: 24.04.85 DE 8512181 U

(43) Veröffentlichungstag der Anmeldung:
29.10.86 Patentblatt 86/44

(84) Benannte Vertragsstaaten:
CH DE FR GB LI NL

(71) Anmelder: Siemens Aktiengesellschaft Berlin und
München
Wittelsbacherplatz 2
D-8000 München 2(DE)

(72) Erfinder: Poth, Rainer
Freiherr-von-Stein-Strasse 2
D-6368 Bad Vilbel 4(DE)

(54) Elektrische Verbindung.

(57) Offenbart wird eine elektrische Verbindung und eine elektrische Isolation hierfür. Dioe elektrische Verbindung weist zwei etwa miteinander fluchtender stabförmige Leiter (1, 2) und eine die Leiter (1, 2) verbindende Kontaktvorrichtung auf, die aus Kontaktlamellen (3) und Ringfedern (4) besteht. Die elektrische Isolation besteht aus zwei Isolatoren (5, 6) für die Leiter (1, 2) und zwei elastischen Manschetten (8, 9), die jeweils einen Isolator (1, 2) umgeben. Die einander zugekehrten Stirnflächen der Manschetten (8, 9) sind durch eine Spannvorrichtung zusammengepreßt, die aus zwei jeweils auf einer Ringschulter (12, 13) einer Manschette (8, 9) aufsitzenden Spannbuchsen (10, 11) und Spannschrauben (14) besteht. Zur Verhinderung von Glimmentladungen sind die einander gegenüberliegenden Stirnflächen der Isolatoren (5, 6) und die an diese Stirnflächen angrenzenden freien Oberflächen der Manschetten (8, 9) elektrisch leitfähig und stehen untereinander in elektrisch leitfähiger Verbindung.

EP 0 199 208 A1

Siemens Aktiengesellschaft      Unser Zeichen

Berlin und München      VPA 85 P 3 1 3 8 E

## Elektrische Verbindung

Die Erfindung bezieht sich auf eine elektrische Verbindung nach dem Oberbegriff des Anspruches 1.

Es ist bereits eine elektrische Verbindung der im Oberbegriff des Anspruches 1 genannten Art vorgeschlagen worden, bei der jedoch keinerleit Maßnahmen zum elektrischen Isolieren der stromführenden Teile getroffen sind.

Aufgabe der Erfindung ist es, die elektrische Verbindung nach dem Oberbegriff des Anspruches 1 mit einer einen hohen Isolationswert aufweisenden elektrischen Isoaltion zu versehen, bei der Feldbeanspruchungen von Luftstrecken verhindert sind.

Die gestellte Aufgabe wird erfindungsgemäß durch die im kennzeichnenden Teil des Anspruches 1 genannte Ausbildung gelöst.

Zweckmäßige Aus- und Weiterbildungen des Erfindungsgegenstandes sind in den Ansprüchen 2 bis 7 angegeben.

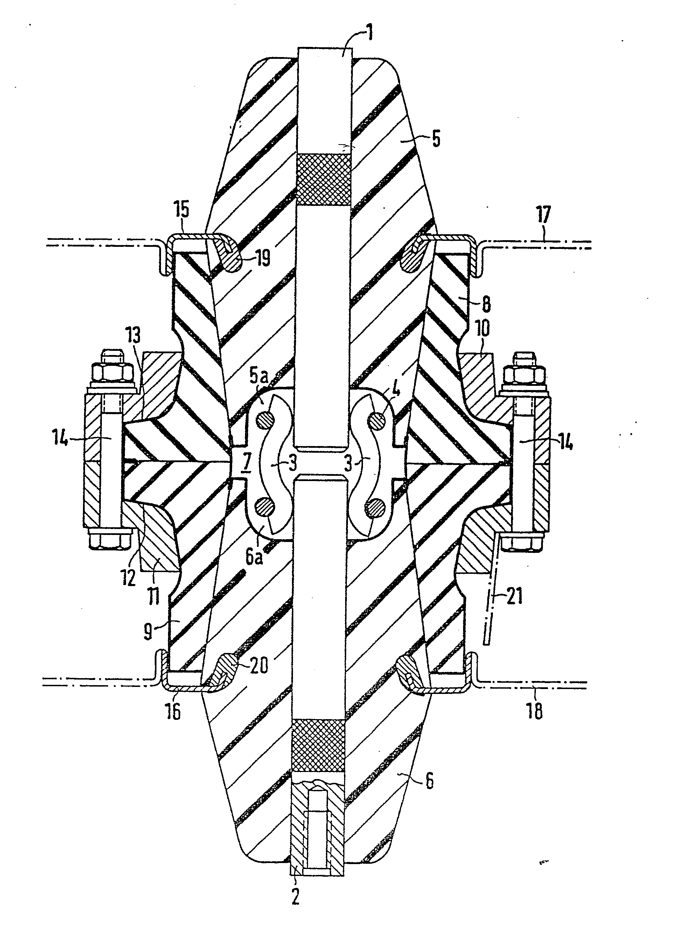

Ein Ausführungsbeispiel der Erfindung ist in der Zeichnung rein schematisch in einem Aufriß im Schnitt dargestellt.

In der Zeichnung sind mit 1 beziehungsweise 2 zwei etwa miteinander fluchtende, eine auftrennbare Strombahn bildende Leiter bezeichnet. Die Leiter 1, 2 sind durch eine Kontaktvorrichtung verbunden, die zum Ausgleichen von Fluchtabweichungen der Leiter 1, 2 ausgebildet ist und aus Kontaktlamellen 3 sowie die Kontaktlamellen 3 umfassenden Ringfedern 4 besteht.

Der Leiter 1 ist von einem rotationssymetrischen Isolator 5 umgeben und der Leiter 2 von einem gleichen rotationssymetrischen Isolator 6. Die Isolatoren 5, 6 können zum Beispiel aus Füllstoffe enthaltendem duroplastischen Kunststoff bestehen.

Zum Auffangen von Fertigungstoleranzen und Wärmedehnungen besteht zwischen den beiden Isolatoren 5,6 ein Zwischenraum 7. Aus dem gleich Grund sind auch die beiden Leitern 1, 2 in einem nicht näher bezeichneten Abstand gehalten. Um den Zwischenraum 7 nicht unverhältnismäßig groß machen zu müssen, ist in der an den Zwischenraum 7 angrenzenden Stirnfläche jedes Isolators 5, 6 eine Vertiefung 5 a beziehungsweise 6 a für die Aufnahme der aus den Kontaktlamellen 3 und den Ringfedern 4 bestehenden Kontaktvorrichtung vorgesehen.

Die Isolatoren 5, 6 sind jeweils von einer aus Isolierstoff bestehenden elastischen Manschette 8, beziehungsweise 9 umgeben. Die einander zugekehrten Stirnflächen der Manschetten 8, 9 sind mit einer Spannvorrichtung gegeneinandergepreßt, die zwei Spannbuchsen 1o, beziehungsweise 11 aufweist. Die Spannbuchsen 1o, 11 sitzen jeweils auf einer Ringschulter 12, 13 einer Manschette 8, 9 auf und sind von Spannschrauben 14 durchsetzt.

Die an den Zwischenraum 7 angrenzenden Flächen der Isolatoren 5, 6 und der Manschetten 8, 9 sind zur Verhinderung von Glimmentladungen elektrisch leitfähig. Die inneren Mantelflächen und die aneinandergepreßten Flächen der Manschetten 8, 9 sowie die Mantelflächen der Isolatoren 5, 6 sind jeweils im Übergangsbereich zum Zwischenraum 7 elektrisch leitfähig und stehen untereinander sowie mit den Leitern 1, 2 in elektrisch leitfähiger Verbindung. Mit dieser Anordnung sind Glimmentladungen vermieden.

Es hat sich als zweckmäßig erwiesen, wie in der Zeichnung dargestellt, den Isolatoren 5, 6 jeweils die Form zweier mit ihren größeren Grundflächen aufeinander gesetzter Kegelstümpfe zu geben. Diese Form ist für die Herstellung günstig, aber auch für die Anordnung eines jedem Isolator 5, 6 eigenen Flansches 15 beziehungsweise 16. Die Flansche 15, 16 sind zur Befestigung der Isolatoren 5, 6 an strichpunktiert dargestellten Wänden 17, 18 ausgebildet.

Jeder der Flansche 17, 18 übergreift die freie Stirnfläche der zugeordneten Manschette 8 beziehungsweise 9 und endet im zugeordneten Isolator 5, 6 in einer elastischen, elektrisch leitfähigen Schicht 19, 2o, die spaltfrei im jeweiligen Isolator 5, 6 angeordnet ist.

Um die Manschetten 8, 9 erden zu können, sind ihre äusseren Mantelflächen ebenfalls elektrisch leitfähig und stehen untereinander sowie mit den Flanschen 15 und 16 in elektrisch leitfähiger Verbindung.

Wie an der Spannbuchse 11 strichpunktiert dargestellt, kann jede Spannbuchse 1o, 11 mit einem rohrförmigen Fortsatz versehen sein, der die freie Oberfläche der zugeordneten Manschette 8, 9 schützend verdeckt.

7 Ansprüche
1 Fig.

0199208

85 P 3 1 3 8 E

Bezugszeichenliste

1  =  Leiter
2  =  Leiter
3  =  Kontaktlamellen
4  =  Ringfedern
5  =  Isolator
    - 5 a  =  Vertiefung
6  =  Isolator
    - 6 a  =  Vertiefung
7  =  Zwischenraum
8  =  Manschette
9  =  Manschette
10  =  Spannbuchse
11  =  Spannbuchse
12  =  Ringschulter
13  =  Ringschulter
14  =  Spannschrauben
15  =  Flansch
16  =  Flansch
17  =  Wand
18  =  Wand
19  =  Schicht
20  =  Schicht
21  =  Fortsatz

Patentansprüche

1. Elektrische Verbindung mit einer auftrennbaren Strombahn, die zwei etwa miteinander fluchtende, stabförmige Leiter und eine diese Leiter verbindende, zum Ausgleichen von Fluchtabweichungen der stabförmigen Leiter ausgebildete Kontaktvorrichtung aufweist, g e k e n n z e i c h n e t d u r c h die Merkmale:

a) die beiden Leitern (1,2) sind jeweils von einem rotationssymetrischen Isolator (5 bzw. 6) umgeben;

b) zwischen den beiden Isolatoren (5,6) besteht ein Zwischenraum (7);

c) die beiden Isolatoren (5,6) sind jeweils von einer elastischen Manschette (8 bzw. 9) aus Isolierstoff umgeben;

d) einander zugekehrte Stirnflächen der Manschetten (8,9) sind mittels einer Spannvorrichtung gegeneinander gepreßt, die aus zwei jeweils auf einer Ringschulter (12,13) einer Manschette (8,9) aufliegenden Spannbuchsen (1o,11) und die Spannbuchsen (1o,11) durchsetzenden Spannschrauben (14) besteht;

e) die an den Zwischenraum (7) angrenzenden Oberflächen der Isolatoren (5,6) und der Manschetten (8,9) sind elektrisch leitfähig und stehen untereinander sowie mit den Leitern (1,2) in elektrisch leitfähiger Verbindung.

2. Verbindung nach Anspruch 1, d a d u r c h g e k e n n z e i c h n e t, daß jeder Isolator (5,6) in seiner an den Zwischenraum (7) angrenzenden Stirnfläche eine zentrische Vertiefung (5a, 6a) aufweist, die zur Aufnahme des zugeordneten Abschnittes der Kontaktvorrichtung (3,4) ausgebildet ist.

3. Verbindung nach Anspruch 1 und 2, d a d u r c h g e - k e n n z e i c h n e t, daß die Isolatoren (5,6) jeweils die Form zweier mit ihren größeren Grundflächen aufeinandergesetzter Kegelstümpfe aufweisen.

4. Verbindung nach Anspruch 1 bis 3, d a d u r c h g e - k e n n z e i c h n e t, daß jeder Isolator (5,6) etwa im Bereich seines größten Durchmessers einen umlaufenden metallischen Flansch (15,16) aufweist, der die freie Stirnfläche der zugeordneten Manschette (8,9) übergreift und im zugeordneten Isolator (5,6) in einer elastischen, elektrisch leitfähigen Schicht (19,2o) endet, die spaltfrei im Isolator (5,6) angeordnet ist.

5. Verbindung nach Anspruch 1 bis 4, d a d u r c h g e - k e n n z e i c h n e t, daß die äußeren Mantelflächen der Manschetten (8,9) elektrisch leitfähig sind und untereinander sowie mit den Flanschen (15,16) in elektrisch leitfähiger Verbindung stehen.

6. Verbindung nach Anspruch 1 bis 5, d a d u r c h g e - k e n n z e i c h n e t, daß die inneren Mantelflächen und die aneinandergepreßten Flächen der Manschetten (8,9) sowie die Mantelflächen der Isolatoren (5,6) jeweils im Übergangsbereich zum Zwischenraum (7) elektrisch leitfähig sind und untereinander in elektrisch leitfähiger Verbindung stehen.

7. Verbindung nach Anspruch 1 bis 6, d a d u r c h g e - k e n n z e i c h n e t, daß jede Spannbuchse (1o,11) einen rohrförmigen Fortsatz (21) aufweist, der die freie Mantelfläche der zugeordneten Manschette (8,9) verdeckt.

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 096 734  (N.V. FABRIEK VAN ELECTRISCHE APPARATEN V/H F. HAZEMEIJER & CO.) <br> * Seite 2, Zeile 38 - Seite 3, Zeile 16; Figuren 1-3 * <br> --- | 1 | H 01 R   13/53 <br> H 02 B   11/04 <br> H 02 G   15/103 |
| A | US-A-1 773 715  (AUSTIN) <br> * Seite 1, Zeilen 24-94; Figur 1 * <br> --- | 1 | |
| A | US-A-1 773 713  (AUSTIN) <br> * Figuren * <br> --- | 1 | |
| A | US-A-3 845 458  (MEIDENSHA) <br> * Figuren 1,2 * <br> --- | 1 | |
| A | FR-A-2 141 752  (SIEMENS) <br> * Figuren 1,2 * <br> --- | 1 | **RECHERCHIERTE SACHGEBIETE (Int. Cl.4)** |
| A | US-A-3 513 425  (GENERAL ELECTRIC CO.) <br> --- | | H 01 R <br> H 02 B <br> H 02 G |
| P,X | DE-U-8 512 181  (SIEMENS) <br> * Insgesamt * <br> ----- | 1-7 | H 01 B <br> H 01 F |

Der vorliegende Recherchenbericht wurde für alle Patentansprüche erstellt.

| Recherchenort <br> DEN HAAG | Abschlußdatum der Recherche <br> 30-07-1986 | Prüfer <br> LOMMEL A. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82